# EUROPEAN PATENT APPLICATION

(11) **EP 3 617 262 A1**
(43) Date of publication of application: **04.03.2020**
(21) Application number: 18794238.8
(22) Date of filing: 27.04.2018
(51) Int. Cl.: C08L 9/00, B60C 1/00, C08K 3/04, C08K 3/22, C08K 3/36, C08L 1/02, C08L 101/12

(54) **RUBBER COMPOSITION**

(30) Priority: 02.05.2017 JP 2017091743
(71) Applicant: Sumitomo Rubber Industries, Ltd., Kobe-shi, Hyogo 651-0072 (JP)
(72) Inventor: WASHIZU, Kensuke, Kobe-shi Hyogo 651-0072 (JP)
(74) Representative: Manitz Finsterwald Patent- und Rechtsanwaltspartnerschaft mbB
(86) International application number: PCT/JP2018/017231
(87) International publication number: WO 2018/203533

(57) **Abstract**

A rubber composition comprising, based on 100 parts by mass of a diene rubber component, 5 to 200 parts by mass of fillers, 5 parts by mass or more of a first resin component having a glass transition temperature of 0°C to 200°C and exhibiting compatibility with the diene rubber component, 5 parts by mass or more of a plasticizer comprising a hetero atom and having a solidifying point of 20°C or lower and a viscosity at 25°C of 100,000 mPa·s or less, and 21 parts by mass or more of a second resin component comprising a hetero atom in its chemical structure and a cyclic conjugated diene structure, and having a glass transition temperature of 0°C to 180°C and an acid value of 400 mgKOH/g or less, wherein the second resin component does not exhibit compatibility with the diene rubber component.

## Description

### TECHNICAL FIELD

The present invention relates to a rubber composition. In particular, the present invention relates to a rubber composition for obtaining a tire being excellent in initial grip performance, wet grip performance, dry grip performance and wear resistance.

### BACKGROUND OF THE INVENTION

Excellent steering stability (dry grip performance) on a dry road surface and excellent steering stability (wet grip performance) on a wet road surface and a half-dry road surface from an initial stage of running up to completion of running have been so far demanded for tread portions of high performance tires. In order to improve dry grip performance (initial grip performance) at an initial stage of running, addition of an oil component comprising a low softening point resin and a liquid polymer and addition of a low temperature softener to a rubber composition to be used on a tread portion have been studied. Further, in order to obtain stable grip performance during running, compounding a high softening point resin to a rubber composition to be used on a tread portion has been studied. Furthermore, in order to improve wet grip performance, compounding inorganic fillers such as silica and aluminum hydroxide has been studied (Refer to Patent Document 1). In addition to the mentioned studies, compounding a maleic acid resin has been studied in order to make wet grip performance compatible with heat build-up characteristic (Refer to Patent Document 2).

### PRIOR ART DOCUMENTS

### Patent Documents

Patent Document 1: JP H08-059893 A
Patent Document 2: JP 2012-201742 A

### SUMMARY OF THE INVENTION

### PROBLEM TO BE SOLVED BY THE INVENTION

However, in a tire using a tread portion composed of a rubber composition comprising a low softening point resin, as a temperature of the tread portion rises during running, grip performance deteriorates. Accordingly, in order to improve grip performance when a tire temperature rises during running, compounding a high softening point resin such as a coumarone-indene resin solely to a rubber composition can be considered. However, in a tire with a tread portion composed of such rubber composition, initial grip performance of the tire on a low temperature road surface is greatly lowered. Further, when a high softening point resin and a low softening point resin are compounded to a rubber composition, a total amount of the resins to be added has a great effect on a temperature characteristic of the entire compound. Thus, a total amount of the resins that can be compounded to the rubber composition is limited. Therefore, in a rubber composition in which a high softening point resin and a low softening point resin are compounded, a tire having both of excellent initial performance and stable grip performance during running could not be obtained.

Further, inorganic fillers such as silica and aluminum hydroxide used in the invention described in Patent Document 1 have poor compatibility with a polymer. Therefore, when these are compounded, a rubber composition is apt to cause poor dispersion. Also, when a maleic acid resin is compounded to a rubber composition like the invention described in Patent Document 2, if a content of the maleic acid resin is large, heat build-up characteristic of the rubber composition is deteriorated or agglomeration due to a high polarity of the maleic acid is likely to be generated, thereby causing poor dispersion. Furthermore, in a tire obtained from a rubber composition comprising a large amount of a maleic acid resin, compounded components are apt to bloom on a rubber surface and wear resistance is apt to deteriorate. Therefore, a total amount of the resins that can be compounded to the rubber composition is apt to be limited.

As mentioned above, no rubber composition enabling a tire being excellent in any of initial grip performance, dry grip performance, wet grip performance and wear resistance to be obtained could have been known so far.

An object of the present invention is to provide a rubber composition for obtaining a tire being excellent in any of initial grip performance, dry grip performance, wet grip performance and wear resistance.

### MEANS TO SOLVE THE PROBLEM

The present invention for solving the above-mentioned problem includes a configuration mentioned below.
(1) A rubber composition comprising, based on 100 parts by mass of a diene rubber component, 5 to 200 parts by mass of fillers, 5 parts by mass or more of a first resin component having a glass transition temperature of 0°C to 200°C and exhibiting compatibility with the diene rubber component, 5 parts by mass or more of a plasticizer comprising a hetero atom and having a solidifying point of 20°C or lower and a viscosity at 25°C of 100,000 mPa·s or less, and 21 parts by mass or more of a second resin component comprising a hetero atom in its chemical structure and a cyclic conjugated diene structure, and having a glass transition temperature of 0°C to 180°C and an acid value of 400 mgKOH/g or less, wherein the second resin component does not exhibit compatibility with the diene rubber component.

### EFFECTS OF THE INVENTION

According to the present invention, a rubber composition for obtaining a tire excellent in any of initial grip performance, dry grip performance, wet grip performance and wear resistance can be provided.

### EMBODIMENT FOR CARRYING OUT THE INVENTION

### <Rubber composition>

The rubber composition according to one embodiment of the present invention mainly comprises a diene rubber component, fillers, a first resin component, a plasticizer, and a second resin component. The rubber composition comprises 5 to 200 parts by mass of the fillers, 5 parts by mass or more of the first resin component, 5 parts by mass or more of the plasticizer and 21 parts by mass or more of the second resin component. According to the rubber composition of this embodiment, by compounding 5 parts by mass or more of the above-mentioned plasticizer, the second resin components can be dispersed satisfactory, and can be compounded in an amount a large as 21 parts by mass or more. As a result, the tire obtained from such a rubber composition is excellent in initial grip performance especially in case of a tire tread being composed of such a rubber composition, adhesion of the tire to a dry road surface is improved, and affinity for a wet road surface is improved due to hydrophilic property exhibited by the above-mentioned second resin component. As a result, according to the rubber composition of this embodiment, in the obtained tire, wet grip performance in addition to initial grip performance and dry grip performance can be improved, and wear resistance can also be improved. The respective components will be explained below.

### (Diene rubber components)

The diene rubber components are not limited particularly. Examples of the diene rubber components include natural rubber (NR), isoprene rubber (IR), butadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), butyl rubber (IIR) and the like. The diene rubbers components may be used in combination. Among these, it is preferable that the diene rubber components comprise NR, BR and SBR from a point that excellent grip performance and wear resistance can be compatible with each other, and it is more preferable that the rubber composition comprises SBR.

The SBR is not limited particularly. Examples of the SBR include an emulsion-polymerized styrene-butadiene rubber (E-SBR), a solution-polymerized styrene-butadiene rubber (S-SBR) and the like. A styrene content of the SBR is preferably not less than 20% by mass, more preferably not less than 25% by mass. Further, the styrene content of the SBR is preferably not more than 60% by mass, more preferably not more than 50% by mass. When the styrene content of the SBR is not less than 20% by mass, enough grip performance is apt to be exhibited in the tire obtained using the rubber composition of this embodiment. On the other hand, when the styrene content of the SBR is not more than 60% by mass, enough wear resistance is apt to be exhibited, temperature dependency is hardly increased and a change in performance due to a temperature change is hardly increased in the tire obtained using the rubber composition of this embodiment.

A content of the SBR is preferably not less than 10% by mass, more preferably not less than 15% by mass in 100% by mass of the diene rubber component. It is noted that an upper limit of the content of the SBR is not limited particularly. The content of the SBR may be 100% by mass in the diene rubber component. When the content of the SBR is not less than 10% by mass, enough heat resistance is apt to be exhibited in the tire obtained using the rubber composition of this embodiment.

A weight-average molecular weight (Mw) of the diene rubber component is not limited particularly. For example, the Mw of the diene rubber component is preferably not less than 1.0 × 10³, more preferably not less than 3.0 × 10³. Further, the Mw of the diene rubber component is preferably not more than 2.0 × 10⁵, more preferably not more than 1.5 × 10⁴. When the Mw is not less than 1.0 × 10³, enough wear resistance and durability are apt to be exhibited in the tire obtained using the rubber composition of this embodiment. On the other hand, when the Mw is not more than 2.0 × 10⁵, such a diene rubber component is handled easily at a production stage thereof. It is noted that in this embodiment, the Mw can be calibrated with standard polystyrene based on measurement values determined with gel permeation chromatography (GPC).

### (Fillers)

The fillers are not limited particularly. The fillers can be optionally selected from various fillers having been generally used in a rubber composition for a tire. Examples of the fillers include carbon black, silica, calcium carbonate, sericite, aluminum hydroxide, cellulose, magnesium carbonate, titanium oxide, clay, talc, magnesium oxide and the like. The fillers may be used in combination. Among these, the fillers preferably comprise at least one inorganic filler selected from the group consisting of carbon black, silica, aluminum hydroxide and cellulose and more preferably comprise carbon black from a point that good grip performance and wear resistance can be obtained in the tire obtained using the rubber composition of this embodiment.

When carbon black is used as a filler, it is not limited particularly. For example, carbon black may be one used commonly or one produced by an oil furnace method. Further, those having different colloidal properties may be used in combination.

A nitrogen adsorption specific surface area (N₂SA) of carbon black is not limited particularly. For example, the N₂SA of carbon black is preferably 100 m²/g or more, more preferably 105 m²/g or more, further preferably 110 m²/g or more. Further, the N₂SA of carbon black is preferably 600 m²/g or less, more preferably 550 m²/g or less, further preferably 530 m²/g or less. When the N₂SA of carbon black is not less than 100 m²/g, enough grip performance is apt to be exhibited in the tire obtained using the rubber composition of this embodiment. On the other hand, when the N₂SA of carbon black is 600 m²/g or less, carbon black is easily dispersed in the rubber composition, and wear resistance of an obtained tire is apt to be exhibited sufficiently. It is noted that in this embodiment, the N₂SA can be measured by the BET method in accordance with ASTM D3037-81.

An oil absorption (OAN) of the carbon black is not limited particularly. For example, the OAN is preferably not less than 50 ml/100 g, more preferably not less than 100 ml/100 g. On the other hand, the OAN is preferably not more than 250 ml/100 g, more preferably not more than 200 ml/100 g, further preferably not more than 135 ml/100 g. When the OAN is not less than 50 ml/100 g, enough wear resistance is apt to be exhibited in the tire obtained using the rubber composition of this embodiment. On the other hand, when the OAN is not more than 250 ml/100 g, enough grip performance is apt to be exhibited in the tire obtained using the rubber composition of this embodiment. It is noted that the OAN of the carbon black can be measured in accordance with JIS K6217-4: 2008.

When silica is used as a filler, it is not limited particularly. There are, for example, silica prepared by a wet method (hydrous silica), silica prepared by a dry method (anhydrous silica), calcium silicate, aluminum silicate and the like. Among these, hydrous silica is preferred.

A nitrogen adsorption specific surface area (N₂SA) of silica is not limited particularly. For example, the N₂SA of silica is preferably 40 m²/g or more, more preferably 50 m²/g or more, further preferably 60 m²/g or more. Further, the N₂SA of silica is preferably 400 m²/g or less, more preferably 360 m²/g or less, further preferably 300 m²/g or less. When the N₂SA of silica is 40 m²/g or more, an enough reinforcing effect is obtained easily in the tire obtained using the rubber composition of this embodiment. On the other hand, when the N₂SA of silica is 400 m²/g or less, silica is dispersed easily in the rubber composition, and the rubber composition is easily processed.

When the rubber composition comprises an aluminum hydroxide as a filler, the aluminum hydroxide is not limited particularly. An average particle size of the aluminum hydroxide is preferably 0.69 µm or less, more preferably 0.65 µm or less, further preferably 0.62 µm or less. Further, the average particle size of the aluminum hydroxide is preferably 0.20 µm or more, more preferably 0.25 µm or more. When the average particle size of the aluminum hydroxide is within the above-mentioned range, in the tire obtained using the rubber composition of this embodiment, good abrasion resistance and wet grip performance are apt to be exhibited. It is noted that the average particle size of the aluminum hydroxide is a number-average particle size and can be measured by a transmission electron microscope.

A nitrogen adsorption specific surface area (N₂SA) of aluminum hydroxide is not limited particularly. For example, the N₂SA of aluminum hydroxide is preferably 10 m²/g or more, more preferably 12 m²/g or more, further preferably 14 m²/g or more. On the other hand, the N₂SA of aluminum hydroxide is preferably 110 m²/g or less, more preferably 100 m²/g or less, further preferably 90 m²/g or less. When the N₂SA of aluminum hydroxide is within the above-mentioned range, good wear resistance and wet grip performance are apt to be exhibited in a tire obtained using the rubber composition of this embodiment.

In the rubber composition of this embodiment, the content of the fillers may be 5 parts by mass or more, and is preferably 10 parts by mass or more, more preferably 30 parts by mass or more based on 100 parts by mass of the diene rubber component. Further, the content of the fillers may be 200 parts by mass or less, and is preferably 180 parts by mass or less, more preferably 150 parts by mass or less based on 100 parts by mass of the diene rubber component. When the content of the filler is within the above-mentioned compounding range, wet grip performance and reinforcing property of a tire obtained using the rubber composition of this embodiment can be improved. When the content of the fillers is less than 5 parts by mass, there is a tendency that enough grip performance cannot be obtained in a tire obtained using the rubber composition of this embodiment. Especially, since the content of the filler is 200 parts by mass or less, excellent wear resistance is apt to be exhibited in a tire obtained using the rubber composition of this embodiment.

### (First resin component)

The first resin component is a resin component being compatible with the above-mentioned diene rubber component. In this embodiment, compatibility with the diene rubber component can be confirmed, for example by a thin film method. The thin film method is such that the first resin component and the diene rubber component are mixed at 20°C in a mass ratio of 1:1, an obtained complex component is formed into a thin film of 0.6 mm or less, and whether the thin film is transparent is observed visually. A transparent thin film can be obtained from a complex component exhibiting compatibility. Meanwhile, in a case of a complex component exhibiting no compatibility, a thin film obtained therefrom develops white turbidity or the like and becomes an opaque film. It is noted that in this embodiment, a complex component exhibiting low compatibility and being incapable of obtaining a transparent thin film is handled as one exhibiting no compatibility.

Further, a glass transition temperature (Tg) of the first resin component may be 0°C or higher, and is more preferably 10°C or higher. Further, the Tg of the first resin component may be 200°C or lower, and is preferably 180°C or lower. When the Tg is lower than 0°C, the first resin component becomes hardly compatible with the diene rubber. Meanwhile, when the Tg exceeds 200°C, the first resin component becomes hardly compatible with the diene rubber. It is noted that in this embodiment, the Tg can be measured with a differential scanning calorimeter (DSC).

The first resin component is not limited particularly as far as it shows the above-mentioned Tg and exhibits compatibility with the diene rubber component. For example, the first resin component is at least one resin selected from the group consisting of a C9 aromatic petroleum resin, an aromatic petroleum resin, a terpene-based resin, an alkyl phenol resin and a coumarone-indene resin. These resins may be ones subjected to a hydrogenation treatment. The first resin components may be used in combination.

In the rubber composition of this embodiment, the content of the first resin component may be 5 parts by mass or more based on 100 parts by mass of the diene rubber component. An upper limit of the content of the first resin component is not limited particularly. For example, the upper limit of the content of the first resin component is preferably 100 parts by mass or less, more preferably 50 parts by mass or less. By compounding the first resin component in the above-mentioned amount, dry grip performance of a tire obtained using the rubber composition of this embodiment can be improved. When the content of the first resin component is less than 5 parts by mass, there is a tendency that enough grip performance cannot be obtained in a tire obtained using the rubber composition of this embodiment. Meanwhile, when the content of the first resin component is less than 200 parts by mass, enough wear resistance is apt to be exhibited in a tire obtained using the rubber composition of this embodiment.

A weight-average molecular weight (Mw) of the first resin component is not limited particularly. For example, the Mw of the first resin component is preferably not less than 1.0 × 10³, more preferably not less than 3.0 × 10³. Further, the Mw of the first resin component is preferably not more than 2.0 × 10⁵, more preferably not more than 1.5 × 10⁴. When the Mw is not less than 1.0 × 10³, enough wear resistance and durability are apt to be exhibited in the tire obtained using the rubber composition of this embodiment. On the other hand, when the Mw is not more than 2.0 × 10⁵, the first resin component is handled easily at a production stage thereof.

### (Plasticizer)

A plasticizer of this embodiment comprises heteroatoms such as oxygen atom, phosphorus atom, nitrogen atom, sulfur atom, chlorine atom, iodine atom and bromine atom. Such a plasticizer having heteroatoms is excellent in solubility with a second resin component described later.

A solidifying point of the plasticizer may be 20°C or lower, and is more preferably 0°C or lower from a point that plasticity is imparted to the rubber composition. A lower limit of the solidifying point of the plasticizer is not limited particularly. For example, the lower limit of the solidifying point of the plasticizer is preferably -100°C or higher, more preferably -80°C or higher. When such a plasticizer having a solidifying point of 20°C or lower is compounded to the rubber composition, excellent wet grip performance and dry grip performance of the tire obtained using the rubber composition according to this embodiment becomes compatible with each other easily. It is noted that in this embodiment, the solidifying point can be measured by sealing a sample (plasticizer) in an aluminum cell, and after inserting the aluminum cell into a sample holder of a differential scanning calorimeter (DSC-60A available from Shimadzu Corporation), detecting an absorption peak while heating the sample holder up to 150°C at 10°C/min. under nitrogen atmosphere.

A viscosity of the plasticizer may be not more than 100,000 mPa·s, and is preferably not more than 80,000 mPa·s from a point of imparting plasticity to the rubber composition. Further, a lower limit of the viscosity of the plasticizer is not limited particularly. By compounding the plasticizer having a viscosity of not more than 100,000 mPa·s, the tire obtained using the rubber composition of this embodiment is apt to exhibit excellent initial grip performance. In addition, the viscosity of the plasticizer can be measured at 25°C using a Brookfield type viscometer.

The plasticizer is not limited particularly as far as it comprises heteroatoms and exhibits the above-mentioned solidifying point and viscosity. Examples of the plasticizer include phosphoric acid ester plasticizers, aliphatic ester plasticizers such as phthalic acid ester plasticizers and adipic acid ester plasticizers. Examples of the phosphoric acid ester plasticizers include trimethyl phosphate, triethyl phosphate, tributyl phosphate, tris(2-ethylhexyl) phosphate, tris(butoxyethyl) phosphate, triphenyl phosphate, tricresyl phosphate, trixylenyl phosphate, cresyldiphenyl phosphate, 2-ethylhexyldiphenyl phosphate and the like. Examples of the phthalic acid ester plasticizers include dimethyl phthalate, diethyl phthalate, dibutyl phthalate, diisobutyl phthalate, di-n-octyl phthalate, bis(2-ethylhexyl) phthalate, dinonyl phthalate, diisononyl phthalate, -n-decyl phthalate, di-isodecyl phthalate, undecyl phthalate, tridecyl phthalate, dibutylbenzyl phthalate and the like. Examples of the adipic acid ester plasticizers include dimethyl adipate, diethyl adipate, dibutyl adipate, diisobutyl adipate, di-n-hexyl adipate, di-n-octyl adipate, bis(2-ethylhexyl) adipate, dinonyl adipate, diisononyl adipate, di-n-decyl adipate, diisodecyl adipate, bis(butyl diglycol) adipate and the like. The plasticizers may be used in combination.

In the rubber composition according to this embodiment, the plasticizer may be compounded in an amount of not less than 5 parts by mass based on 100 parts by mass of the diene rubber component. Additionally, an upper limit of the content of the plasticizer is not limited particularly. For example, the upper limit of the content of the plasticizer is preferably not more than 100 parts by mass, more preferably not more than 50 parts by mass. When the plasticizer is compounded within the above-mentioned range, it can improve dispersibility of the second resin component described later. Further, the tire obtained using the rubber composition of this embodiment can improve initial dry grip performance. When the content of the plasticizer is less than 5 parts by mass, there is a tendency that solubility of the plasticizer in the second resin component is decreased. In that case, the second resin component is hardly dispersed in the rubber composition, and blooming tends to arise. As a result, in a tire obtained from such a rubber composition, wear resistance tends to be inferior.

Additionally, it is preferable that the plasticizer is a liquid having a flash point of 200°C or higher. Thus, a fear of fires can be lessened when handling the plasticizer. It is noted that the flash point of the plasticizer can be measured by a Cleveland open-cup method in accordance with JIS K 2265-4:2007.

### (Second resin component)

The second resin component is a resin component exhibiting no compatibility with the above-mentioned diene rubber component. In this embodiment, compatibility with the diene rubber component can be confirmed by the same method as described in the first resin component.

The second resin component of this embodiment comprises heteroatoms in its chemical structure and has a cyclic conjugated diene structure. The cyclic conjugated diene structure is not limited particularly. Examples of the cyclic conjugated diene structure include an aromatic structure composed of hydrocarbon having a benzene structure, a naphthalene structure or the like; a heterocyclic structure composed of hydrocarbon having heteroatoms such as pyrrole, furan, thiophene or the like: a structure being a base structure of a natural resin such as an abietic acid; and the like. The second resin component may comprise two or more of these structures. The second resin component comprising the cyclic conjugated diene structure is excellent in affinity for the diene rubber component and the fillers (especially carbon black). Therefore, the second resin component shows good dispersibility in the rubber composition.

A Tg of the second resin component may be 0°C or higher, and is more preferably 10°C or higher. Further, the Tg of the second resin component may be 180°C or lower, and is preferably 150°C or lower. When the Tg is lower than 0°C, blooming tends to arise on an obtained rubber composition. On the other hand, when the Tg exceeds 180°C, there is a tendency that the second resin component is hardly dispersed in the rubber composition. As a result, in a tire obtained from such a rubber composition, wear resistance tends to be inferior. In this embodiment, the Tg of the second resin component can be measured by the same method as described in the first resin component.

An acid value of the second resin component may be 400 mgKOH/g or less, and is preferably 300 mgKOH/g or less. A lower limit of the acid value is not limited particularly. For example, the acid value is preferably 70 mgKOH/g or more, more preferably 90 mgKOH/g or more. When the acid value exceeds 400 mgKOH/g, compatibility of the second resin component with the diene rubber component tends to be inferior. As a result, in a tire obtained from such a rubber composition, wear resistance tends to be inferior. In this embodiment, the acid value is, for example, one represented in milligram by an amount of potassium hydroxide required for neutralizing an acid contained in 1 g of the resin, and can be measured by a potentiometric titration (JIS K 0070:1992).

The second resin component does not exhibit compatibility with the diene rubber component, has a cyclic conjugated diene structure, and is not limited particularly as far as it shows the above-mentioned glass transition temperature and acid value. For example, it is preferable that the second resin component comprises at least one resin selected from the group consisting of a maleic acid resin, a bisphenol resin, an acrylic resin, a rosin resin and a urethane resin.

The maleic acid resin is not limited particularly. Examples of the maleic acid resin include a reaction product of rosin and maleic anhydride (a rosin-modified maleic acid resin composed of a rosin-maleic anhydride adduct), a reaction product of rosin, maleic anhydride and polyhydric alcohol (ester type rosin-modified maleic acid resin) and the like.

In this embodiment, maleic acid resins include resins obtained using maleic acid or fumaric acid in place of the above-mentioned maleic anhydride. Namely, in addition to the reaction product of rosin, maleic anhydride and polyhydric alcohol, the ester type rosin-modified maleic acid resins include a reaction product of rosin, maleic acid and polyhydric alcohol, a reaction product of rosin, fumaric acid and polyhydric alcohol and the like.

The rosin is not limited particularly. Examples of the rosin include abietic acid, dehydroabietic acid, neoabietic acid, palustric acid, pimaric acid, tall oil rosin mainly comprising isopimaric acid, gum rosin, wood rosin and the like.

The polyhydric alcohol is not limited particularly. Examples of the polyhydric alcohol include ethylene glycol, diethylene glycol, propylene glycol, dipropylene glycol, tripropylene glycol, trimethylolpropane, glycerin, pentaerythritol, sorbitol and the like.

The bisphenol resin is not limited particularly. Examples of the bisphenol resin include resins comprising a component unit such as bisphenol F or bisphenol A.

The acrylic resin is not limited particularly. Examples of the acrylic resin include (meth)acrylic aids, (meth)acrylic esters (alkyl esters such as 2-ethyl hexyl acrylate, aryl esters, aralkyl esters and the like), (meth)acrylamide, and (meth)acrylic acid derivatives such as (meth)acrylamide derivative and the like. It is noted that (meth)acrylic acid is a general term for acrylic acid and methacrylic acid. Aromatic vinyl monomer components constituting the acrylic resin are aromatic vinyl such as styrene, α-methylstyrene, vinyltoluene, vinyl naphthalene, divinylbenzene, trivinylbenzene and divinylnaphthalene.

Other monomer components may be used as monomer components constituting the acrylic resin together with (meth)acrylic acids, (meth)acrylic acid derivatives and aromatic vinyl. Further, the acrylic resin may have a small amount of hydroxyl group, epoxy group, silanol group or the like in addition to a carboxyl group. Furthermore, it is preferable that the acrylic resin has an alkyl group in addition to a carboxyl group. The number of carbon atoms of the alkyl group is not limited particularly. For example, the number of carbon atoms of the alkyl group may be 1 to 30.

The rosin resin is not limited particularly. Examples of the rosin resin include natural rosin resins (polymerized rosins), for example, gum rosins comprising a resin acid as an essential ingredient such as abietic acid, neoabietic acid, palustric acid, levopimaric acid, pimaric acid, isopimaric acid and dehydroabietic acid, wood rosin and tall oil rosin, modified rosin resins such as a hydrogenated rosin resin and a rosin-modified phenol resin, rosin esters such as rosin glycerin ester, disproportionated rosin resin obtained by disproportionating a rosin resin and the like.

The urethane resin is not limited particularly. The urethane resin is one obtained by reacting an isocyanate group-containing compound with a polyol compound or one obtained by hardening an isocyanate group-containing compound with amine.

The rubber composition according to this embodiment may comprise the second resin component in an amount of not less than 21 parts by mass, preferably not less than 25 parts by mass based on 100 parts by mass of the diene rubber component. An upper limit of a content of the second resin component is not limited particularly. For example, the upper limit of the content of the second resin component is preferably not more than 100 parts by mass, more preferably not more than 50 parts by mass. When the second resin component is contained in the above-mentioned compounding amount, dispersibility of the second resin component in the rubber composition and processability can be improved. Further, dry grip performance, wet grip performance and wear resistance of a tire obtained using the rubber composition according to this embodiment can be improved. When the content of the second resin component is less than 21 parts by mass, there is a tendency that a tire produced from the so-obtained rubber composition is inferior in wet grip performance and the wet grip performance is hardly compatible with heat build-up characteristic.

A weight-average molecular weight (Mw) of the second resin component is not limited particularly. For example, the Mw of the second resin component is preferably not less than 1.0 × 10³, more preferably not less than 3.0 × 10³. Further, the Mw of the second resin component is preferably not more than 2.0 × 10⁵, more preferably not more than 1.5 × 10⁴. When the Mw is not less than 1.0 × 10³, enough wear resistance and durability are apt to be exhibited in the tire obtained using the rubber composition of this embodiment. On the other hand, when the Mw is not more than 2.0 × 10⁵, the second resin component is handled easily at a production stage thereof.

### (Optional components)

In addition to the above-mentioned components, other compounding agents commonly used as optional components in manufacturing of the rubber composition can be compounded in the rubber composition according to this embodiment. Examples of such optional components include a softening agent, a coupling agent, zinc oxide, sulfur, stearic acid, antioxidants, wax, vulcanizing agents, vulcanization accelerator and the like. Further, process oil such as aromatic oil or mineral oil may be compounded to the rubber composition from a point of improving processability of the rubber composition. Incidentally, these process oils are not included in the above-mentioned plasticizer.

A coupling agent can be suitably used in combination with silica when the rubber composition comprises the silica as a filler. The coupling agent is not limited particularly. Examples thereof include alkoxysilane coupling agents, mercapto silane coupling agents and the like.

The zinc oxide is not limited particularly, and those used in the field of a rubber for a tire or the like can be used. Among these, fine particle zinc oxides are preferable. More specifically, an average primary particle size of the fine particle zinc oxides is preferably not more than 200 nm, more preferably not more than 100 nm. A lower limit of the average primary particle size is not limited particularly. For example, the lower limit of the average primary particle size is preferably not less than 20 nm, more preferably not less than 30 nm. It is noted that the average primary particle size of the zinc oxide stands for an average particle size calibrated with a specific surface area measured by a BET method by nitrogen adsorption.

When the rubber composition comprises zinc oxide, the content thereof is preferably not less than 0.5 part by mass, more preferably not less than 1 part by mass based on 100 parts by mass of the diene rubber component. On the other hand, the content of zinc oxide is preferably not more than 10 parts by mass, more preferably not more than 5 parts by mass based on 100 parts by mass of the diene rubber component.

Sulfur is pure sulfur contained as a vulcanizing agent. Therefore, sulfur components contained in the vulcanization accelerator, etc. are not included in the sulfur as used here. The sulfur is not limited particularly. For example, insoluble sulfur commonly used in the rubber industry can be suitably used as the sulfur.

When the rubber composition comprises sulfur, a content thereof is preferably not less than 1 part by mass based on 100 parts by mass of the diene rubber component. If the content of sulfur is less than 1 part by mass, durability of a tire obtained using the rubber composition according to this embodiment tends to lower. When insoluble sulfur is used as sulfur, the content thereof is a content of pure sulfur except an oil content.

The antioxidant is not limited particularly. Examples thereof include amine antioxidants, phenol antioxidants, imidazole antioxidants, carbamic acid metal salt, wax and the like. Antioxidants may be used in combination. Among these, amine antioxidants are preferred as the antioxidant.

When the rubber composition comprises an antioxidant, a content thereof is not limited particularly. For example, the content of antioxidant is preferably not less than 0.5 part by mass, more preferably not less than 1.0 part by mass based on 100 parts by mass of the diene rubber component. On the other hand, the content of antioxidant is preferably not more than 7 parts by mass, more preferably not more than 5 parts by mass based on 100 parts by mass of the diene rubber component.

The vulcanization accelerator is not limited particularly. Examples of the vulcanization accelerator include sulfenamide-based vulcanization accelerator, thiazole-based vulcanization accelerator, thiuram-based vulcanization accelerator, thiourea-based vulcanization accelerator, guanidine-based vulcanization accelerator, dithiocarbamate-based vulcanization accelerator, aldehyde amine-based vulcanization accelerator, aldehyde ammonia-based vulcanization accelerator, imidazoline-based vulcanization accelerator, xanthate-based vulcanization accelerator and the like. These vulcanization accelerators may be used in combination. Among these, sulfenamide-based vulcanization accelerators are preferred from a point that vulcanization characteristic is excellent and fuel efficiency of a tire obtained using the vulcanized rubber is satisfactory.

When the rubber composition comprises a vulcanization accelerator, a content thereof is not limited particularly. For example, the content of vulcanization accelerator is preferably 0.1 part by mass or more, more preferably 0.5 parts by mass or more based on 100 parts by mass of the diene rubber component. On the other hand, the content of vulcanization accelerator is preferably 5 parts by mass or less, more preferably 3 parts by mass or less based on 100 parts by mass of the diene rubber component. When the content of vulcanization accelerator is less than 0.1 part by mass, there is a tendency that the rubber composition is hardly vulcanized sufficiently. On the other hand, when the content of vulcanization accelerator exceeds 5 parts by mass, there is a tendency that burning of the rubber of the rubber composition is apt to occur.

### <Method of preparing rubber composition>

The rubber composition according to this embodiment of the present invention can be prepared by a usual method. The rubber composition can be prepared, for example, by a method of kneading the above-mentioned components with a generally well-known kneading machine used in a rubber industry such as a Banbury mixer, a kneader or an open roll and then conducting vulcanization, or by other method.

The obtained rubber composition can be used suitably for various applications. For example, the rubber composition can be used suitably in technical fields such as tires, rubber soles of footwears, belts for industrial use, butyl rubber frame, packings, seismic isolation rubber and medicine plugs. Among these, the rubber composition is suitable for rubber soles of footwears, belts for industrial use and treads for pneumatic tires.

### <Method of producing tire>

A method of producing a tire from the rubber composition according to this embodiment of the present invention is not limited particularly. For example, the tire can be produced by subjecting an unvulcanized rubber composition to extrusion processing to a shape of each of tire members (such as a shape of a tread portion) and then laminating together with other tire members on a tire building machine and forming by a usual forming method, thus forming an unvulcanized tire, and heating and compressing this unvulcanized tire in a vulcanizer.

One embodiment of the present invention was mentioned above. The present invention is not limited to the above-mentioned embodiment. Additionally, the above-mentioned embodiment is one embodiment of the invention having the following configurations.
(1) A rubber composition comprising, based on 100 parts by mass of a diene rubber component, 5 to 200 parts by mass of fillers, 5 parts by mass or more of a first resin component having a glass transition temperature of 0°C to 200°C and exhibiting compatibility with the diene rubber component, 5 parts by mass or more of a plasticizer comprising a hetero atom and having a solidifying point of 20°C or lower and a viscosity at 25°C of 100,000 mPa·s or less, and 21 parts by mass or more of a second resin component comprising a hetero atom in its chemical structure and a cyclic conjugated diene structure, and having a glass transition temperature of 0°C to 180°C and an acid value of 400 mgKOH/g or less, wherein the second resin component does not exhibit compatibility with the diene rubber component.
(2) The rubber composition of above (1), wherein the fillers comprise at least one inorganic filler selected from the group consisting of carbon black, silica, aluminum hydroxide and cellulose.
(3) The rubber composition of above (1) or (2), wherein the plasticizer is a liquid having a flash point of 200°C or higher.
(4) The rubber composition of any one of above (1) to (3), wherein the second resin component comprises at least one resin selected from the group consisting of a maleic acid resin, a bisphenol resin, an acrylic resin, a rosin resin and a urethane resin.

### EXAMPLE

The present invention is then explained by means of Examples, but is not limited to the Examples.

A variety of chemicals used in Examples and Comparative Examples will be explained below.

### (Diene rubber components)

SBR: Tufdene 4850 (available from Asahi Kasei Corporation, Mw: 350,000, styrene content: 40% by mass, vinyl content: 46% by mass, glass transition temperature: -17°C)
BR: BR150B (available from Ube Industries, Ltd., cis content: 97% by mass, ML1+4(100°C): 40)
NR: TSR20

### (Fillers)

Silica: Nipsil AQ (available from Toso Corporation)
Aluminum hydroxide: Higilite H-43 (available from Showa Denko K.K., average primary particle size: 1 µm)
Carbon black: SEAST 9SAF (available from Tokai Carbon Co., Ltd., N₂SA: 142 m²/g)

### (First resin components)

Coumarone-indene resin: COUMARONE G90 (available from Nitto Chemical Co., Ltd., Mw: 500, Tg: 54°C, softening point: 90°C)
Aromatic hydrocarbon resin: NEOPOLYMER 160 (available from Nippon Petrochemicals Co., Ltd., Mw: 2,700, Tg: 100°C, softening point: 165°C)

### (Plasticizers)

Dioctyl phthalate (DOP): (available from Showa Kagaku Kabushiki Kaisha, specific weight: 0.96, viscosity (25°C): 81 mPa·s, softening point: 218°C)

### (Second resin components)

Maleic acid resin 1: X205 (available from SEIKO PMC CORPORATION, styrene-maleic acid copolymer including a cyclic conjugated diene structure, Mw: 500, acid value: 205 mgKOH/g, Tg: 71°C)
Maleic acid resin 2: SMA1000 (available from SARTOMER JAPAN INC., styrene-maleic acid copolymer including a cyclic conjugated diene structure, Mw: 500, acid value: 495 mgKOH/g, Tg: 60°C)
Acrylic resin: UC3900 (available from TOAGOSEI CO., LTD., styrene-acrylic acid copolymer including a cyclic conjugated diene structure, Mw: 500, acid value: 108 mgKOH/g, Tg: 65°C)
Rosin resin: HARIESTER TF (available from Harima Chemicals Group, Inc., rosin ester resin including a cyclic conjugated diene structure, Mw: 500, acid value: 10 mgKOH/g, Tg: 80°C)
Urethane resin: Brand name: AROMATIC URETHANE ACRYLATE (available from TOTAL LUBRICANTS JAPAN, urethane resin including a cyclic conjugated diene structure, Mw: 630, acid value: 3 mgKOH/g, Tg: 32°C)
Bisphenol A resin: CHEMITYLEN PEB-13ST (available from Sanyo Chemical Industries, Ltd., bisphenol A resin including a cyclic conjugated diene structure, Mw: 420, acid value: 0 mgKOH/g, Tg: 70°C)

### (Others)

Silane coupling agent: Si266 (bis(3-triethoxysilylpropyl)disulfide, available from Evonik Degussa GmbH)
Process oil: Diana Process AH-24 (available from Idemitsu Kosan Co., Ltd.)
Zinc oxide: Zincox Super F-1 (available from HAKUSUI TECH KABUSHIKI KAISHA)
Stearic acid: Stearic acid "Tsubaki" (available from NOF CORPORATION)
Antioxidant 1: ANTIGENE 6C (available from Sumitomo Chemical Company, Limited)
Antioxidant 2: ANTIGENE RD (available from Sumitomo Chemical Company, Limited)
Wax: SUNNOC N (available from OUCHI SHINKO CHEMICAL INDUSTRIAL CO., LTD.)
Sulfur: Powdered sulfur (available from Karuizawa Iou Kabushiki Kaisha)
Vulcanization accelerator: Nocceler DM (available from OUCHI SHINKO CHEMICAL INDUSTRIAL CO., LTD.)

### Examples 1 to 10 and Comparative Examples 1 to 8

Compounding materials were kneaded in a 1.7-liter Banbury mixer manufactured by Kobe Steel, Ltd. according to the compounding formulations shown in Tables 1 and 2. Then, sulfur and a vulcanization accelerator were added to the obtained kneaded rubber, and a mixture was subjected to vulcanization at 150°C for 30 minutes using an open roll to obtain a rubber composition. The obtained rubber composition was subjected to evaluation of processability (dispersibility of component materials and adhesion of a rubber) in accordance with the following evaluation methods. Further, each of the rubber compositions was molded into a form of a tread, and a tire was manufactured by a common tire molding method and vulcanization method. The obtained tires were subjected to evaluations for wet grip performance, initial grip performance, stable grip performance and wear resistance in accordance with the following evaluation methods.

### [Evaluation of rubber composition]

### <Dispersibility of component materials>

A sheet of the rubber composition obtained from the mixture of materials was produced, and a cross-section of a cut sheet was observed to check to see whether there is found a white foreign matter. Results are shown in Tables 1 and 2.

### (Evaluation criteria)

○: It is concluded that the rubber composition contains no foreign matter, and has good dispersibility of component materials.
×: It is concluded that the rubber composition contains a foreign matter, and has poor dispersibility of component materials.

### <Adhesion of rubber>

At the time of discharging of a kneaded rubber, whether it is easily discharged from a rotor or a roll was observed (adhesion of a rubber to a rotor or a roll). Results are shown in Tables 1 and 2.
○: The rubber is low in adhesion, and is easily discharged.
×: The rubber is high in adhesion, and is hardly discharged.

### [Evaluation of tire]

### <Wet grip performance>

Tires of a size of 215/45R17 having a tread made of each of the rubber compositions were manufactured. The respective tires were mounted on a domestic FR vehicle with a displacement of 2,000 cc, and the vehicle was actually driven 10 laps on a wet asphalt road surface of a test course having been wetted by a sprinkler truck. The steering stability of control of the driving at the best lap and the final lap was compared and evaluated by a test driver. The result of each of the test tires is indicated by an index, assuming that the stability of Comparative Example 1 is 100. It shows that the larger the index is, the higher the stable grip performance on the wet asphalt road surface is. Results are shown in Tables 1 and 2.

### <Initial grip performance>

Tires of a size of 215/45R17 having a tread made of each of the rubber compositions were manufactured. The respective tires were mounted on a domestic FR vehicle with a displacement of 2,000 cc, and the vehicle was actually driven 10 laps on a dry asphalt road surface of a test course. The steering stability of control of the driving at the second lap was evaluated by a test driver. The result of each of the test tires is indicated by an index, assuming that the stability of Comparative Example 1 is 100. It shows that the larger the index is, the higher the initial grip performance on the dry asphalt road surface is. Results are shown in Tables 1 and 2.

### <Stable grip performance>

Tires of a size of 215/45R17 having a tread made of each of the rubber compositions were manufactured. The respective tires were mounted on a domestic FR vehicle with a displacement of 2000 cc, and the vehicle was actually driven 10 laps on a dry asphalt road surface of a test course. The steering stability of control of the driving at the best lap and the final lap was compared and evaluated by a test driver, and the result of each of the test tires is indicated by an index, assuming that the result in the Comparative Example 1 is 100. It shows that the larger the index is, the higher the grip performance on the dry road surface is. Results are shown in Table 1 and 2.

### <Wear resistance>

Tires of a size of 215/45R17 having a tread made of each of the rubber compositions were manufactured. The respective tires were mounted on a domestic FR vehicle with a displacement of 2000 cc, and the vehicle was actually driven 10 laps on a dry asphalt road surface of a test course. An amount of a remaining groove of the tire tread rubber was measured (a tread groove of a new product being 8 mm) to evaluate wear resistance. The result is indicated by an index, assuming that the remaining groove amount in Comparative Example 1 is 100. It shows that the larger the index is, the higher the wear resistance is. Results are shown in Tables 1 and 2.

**Table 1**

| | Comparative Example | | | | | | | |
|---|---|---|---|---|---|---|---|---|
| | 1 | 2 | 3 | 4 | 5 | 6 | 7 | 8 |
| Diene rubber component | | | | | | | | |
| SBR | 80 | 80 | 80 | 80 | 80 | 80 | 80 | 80 |
| BR | 10 | 10 | 10 | 10 | 10 | 10 | 10 | 10 |
| NR | 10 | 10 | 10 | 10 | 10 | 10 | 10 | 10 |

| Fillers | | | | | | | | |
|---|---|---|---|---|---|---|---|---|
| Silica | 70 | 70 | 70 | 70 | 70 | 70 | 4 | 200 |
| Aluminum hydroxide | 0 | 21 | 0 | 0 | 6 | 0 | 0 | 0 |
| Carbon black | 10 | 10 | 10 | 10 | 10 | 10 | 0 | 10 |

| First resin component | | | | | | | | |
|---|---|---|---|---|---|---|---|---|
| COUMARONE G90 | 0 | 0 | 10 | 10 | 10 | 10 | 0 | 0 |

| Plasticizer | | | | | | | | |
|---|---|---|---|---|---|---|---|---|
| DOP | 0 | 0 | 0 | 0 | 0 | 5 | 0 | 0 |

| Second resin component | | | | | | | | |
|---|---|---|---|---|---|---|---|---|
| Maleic acid resin 1 | 0 | 0 | 0 | 21 | 15 | 0 | 0 | 0 |
| Maleic acid resin 2 | 0 | 0 | 0 | 0 | 0 | 0 | 0 | 0 |
| Silane coupling agent | 7 | 7 | 7 | 7 | 7 | 7 | 7 | 7 |
| Process oil | 10 | 10 | 10 | 10 | 10 | 10 | 10 | 10 |
| Zinc oxide | 3 | 3 | 3 | 3 | 3 | 3 | 3 | 3 |
| Antioxidant 1 | 2 | 2 | 2 | 2 | 2 | 2 | 2 | 2 |
| Antioxidant 2 | 1 | 1 | 1 | 1 | 1 | 1 | 1 | 1 |
| Stearic acid | 2 | 2 | 2 | 2 | 2 | 2 | 2 | 2 |
| Wax | 2 | 2 | 2 | 2 | 2 | 2 | 2 | 2 |
| Sulfur | 1 | 1 | 1 | 1 | 1 | 1 | 1 | 1 |
| Vulcanization accelerator | 2 | 2 | 2 | 2 | 2 | 2 | 2 | 2 |

| | Comparative Example | | | | | | | |
|---|---|---|---|---|---|---|---|---|
| | 1 | 2 | 3 | 4 | 5 | 6 | 7 | 8 |
| Results of evaluation | | | | | | | | |
| Dispersibility of materials | ○ | ○ | ○ | × | × | ○ | ○ | × |
| Adhesion of rubber | ○ | ○ | × | ○ | ○ | × | × | ○ |
| Wet grip performance | 100 | 107 | 105 | 92 | 96 | 95 | 51 | 90 |
| Initial grip performance | 100 | 101 | 105 | 108 | 106 | 109 | 52 | 89 |
| Stable grip performance | 100 | 101 | 105 | 113 | 105 | 98 | 52 | 103 |
| Wear resistance | 100 | 72 | 101 | 83 | 81 | 101 | 69 | 62 |

**Table 2**

| | Example | | | | | | | | | |
|---|---|---|---|---|---|---|---|---|---|---|
| | 1 | 2 | 3 | 4 | 5 | 6 | 7 | 8 | 9 | 10 |
| Diene rubber component | | | | | | | | | | |
| SBR | 80 | 80 | 80 | 80 | 80 | 80 | 80 | 80 | 80 | 80 |
| BR | 10 | 10 | 10 | 10 | 10 | 10 | 10 | 10 | 10 | 10 |
| NR | 10 | 10 | 10 | 10 | 10 | 10 | 10 | 10 | 10 | 10 |

| Fillers | | | | | | | | | | |
|---|---|---|---|---|---|---|---|---|---|---|
| Silica | 70 | 49 | 70 | 70 | 70 | 70 | 180 | 70 | 70 | 70 |
| Aluminum hydroxide | 6 | 0 | 6 | 6 | 6 | 6 | 6 | 6 | 6 | 6 |
| Carbon black | 10 | 10 | 10 | 10 | 10 | 10 | 10 | 10 | 10 | 10 |

| First resin component | | | | | | | | | | |
|---|---|---|---|---|---|---|---|---|---|---|
| COUMARONE G90 | 5 | 5 | 5 | 5 | 5 | 5 | 5 | 50 | | 5 |
| NEOPOLYMER 160 | | | | | | | | | 5 | |

| Plasticizer | | | | | | | | | | |
|---|---|---|---|---|---|---|---|---|---|---|
| DOP | 5 | 5 | 5 | 5 | 5 | 5 | 5 | 5 | 5 | 50 |

| Second resin component | | | | | | | | | | |
|---|---|---|---|---|---|---|---|---|---|---|
| Maleic acid resin 1 | 21 | 27 | 0 | 0 | 0 | 0 | 21 | 21 | 21 | 21 |
| Acrylic resin 2 | 0 | 0 | 21 | 0 | 0 | 0 | 0 | 0 | 0 | 0 |
| Rosin resin | 0 | 0 | 0 | 21 | 0 | 0 | 0 | 0 | 0 | 0 |
| Bisphenol A resin | 0 | 0 | 0 | 0 | 21 | 0 | 0 | 0 | 0 | 0 |
| Urethane resin | 0 | 0 | 0 | 0 | 0 | 21 | 0 | 0 | 0 | 0 |
| Silane coupling agent | 7 | 7 | 7 | 7 | 7 | 7 | 7 | 7 | 7 | 7 |
| Process oil | 10 | 10 | 10 | 10 | 10 | 10 | 10 | 10 | 10 | 10 |
| Zinc oxide | 3 | 3 | 3 | 3 | 3 | 3 | 3 | 3 | 3 | 3 |
| Antioxidant 1 | 2 | 2 | 2 | 2 | 2 | 2 | 2 | 2 | 2 | 2 |
| Antioxidant 2 | 1 | 1 | 1 | 1 | 1 | 1 | 1 | 1 | 1 | 1 |
| Stearic acid | 2 | 2 | 2 | 2 | 2 | 2 | 2 | 2 | 2 | 2 |
| Wax | 2 | 2 | 2 | 2 | 2 | 2 | 2 | 2 | 2 | 2 |
| Sulfur | 1 | 1 | 1 | 1 | 1 | 1 | 1 | 1 | 1 | 1 |
| Vulcanization accelerator | 2 | 2 | 2 | 2 | 2 | 2 | 2 | 2 | 2 | 2 |

| | Example | | | | | | | | | |
|---|---|---|---|---|---|---|---|---|---|---|
| | 1 | 2 | 3 | 4 | 5 | 6 | 7 | 8 | 9 | 10 |
| Results of evaluation | | | | | | | | | | |
| Dispersibility of materials | ○ | ○ | ○ | ○ | ○ | ○ | ○ | ○ | ○ | ○ |
| Adhesion of rubber | ○ | ○ | ○ | ○ | ○ | ○ | ○ | ○ | ○ | ○ |
| Wet grip performance | 115 | 117 | 112 | 116 | 115 | 125 | 102 | 104 | 115 | 123 |
| Initial grip performance | 112 | 108 | 111 | 128 | 125 | 128 | 101 | 104 | 112 | 132 |
| Stable grip performance | 129 | 132 | 129 | 118 | 125 | 113 | 129 | 105 | 129 | 106 |
| Wear resistance | 110 | 110 | 111 | 111 | 110 | 110 | 132 | 110 | 110 | 101 |

As shown in Tables 1 and 2, the rubber compositions according to Examples 1 to 10 of the present invention have good dispersibility of the component materials and adhesion of the rubber. The tires having treads made of the rubber compositions according to Examples 1 to 10 have good initial grip performance, wet grip performance, dry grip performance and wear resistance as compared with a tire obtained from the rubber composition of Comparative Example 1.

On the other hand, the tire having a tread made of the rubber composition according to Comparative Example 1 which does not comprise the first resin component, the plasticizer and the second resin component was inferior in initial grip performance, wet grip performance, dry grip performance and wear resistance as compared with the tires obtained from the rubber compositions of Examples. Further, in the tire obtained from the rubber composition of Comparative Example 2, to which aluminum hydroxide was added as a filler in addition to the fillers of Comparative Example 1, wear resistance decreased unlike Comparative Example 1. In the rubber composition of Comparative Example 3, to which the first resin component was added unlike Comparative Example 1, adhesion of the rubber lowered. In the rubber composition of Comparative Example 4, to which the first resin component and the second resin component were added unlike Comparative Example 1, dispersibility of the component materials lowered. Further, wet grip performance and wear resistance of the tire obtained from this rubber composition lowered. In the rubber composition of Comparative Example 5, to which aluminum hydroxide as a filler, the first resin component and the second resin component were added unlike Comparative Example 1, dispersibility of the component materials lowered. Further, wet grip performance and wear resistance of the tire obtained from this rubber composition lowered. In the rubber composition of Comparative Example 6, to which the first resin component and the plasticizer were added unlike Comparative Example 1, adhesion of the rubber lowered. Further, wet grip performance and stable grip performance of the tire obtained from this rubber composition lowered. In the rubber composition of Comparative Example 7, in which a compounding amount of the filler was less than 5 parts by mass, each of grip performances of the obtained tire lowered. In the rubber composition of Comparative Example 8, in which a compounding amount of the filler was more than 200 parts by mass, wear resistance of the obtained tire lowered.

## Claims

1. A rubber composition comprising, based on 100 parts by mass of a diene rubber component,
5 to 200 parts by mass of fillers,
5 parts by mass or more of a first resin component having a glass transition temperature of 0°C to 200°C and exhibiting compatibility with the diene rubber component,
5 parts by mass or more of a plasticizer comprising a hetero atom and having a solidifying point of 20°C or lower and a viscosity at 25°C of 100,000 mPa·s or less, and
21 parts by mass or more of a second resin component comprising a hetero atom in its chemical structure and a cyclic conjugated diene structure, and having a glass transition temperature of 0°C to 180°C and an acid value of 400 mgKOH/g or less, wherein the second resin component does not exhibit compatibility with the diene rubber component.

2. The rubber composition of claim 1, wherein the fillers comprise at least one inorganic filler selected from the group consisting of carbon black, silica, aluminum hydroxide and cellulose.

3. The rubber composition of claim 1 or 2, wherein the plasticizer is a liquid having a flash point of 200°C or higher.

4. The rubber composition of any one of claims 1 to 3, wherein the second resin component comprises at least one resin selected from the group consisting of a maleic acid resin, a bisphenol resin, an acrylic resin, a rosin resin and a urethane resin.
